# EUROPEAN PATENT APPLICATION

(11) **EP 4 618 579 A1**
(43) Date of publication of application: **17.09.2025**
(21) Application number: 25161280.0
(22) Date of filing: 03.03.2025
(51) Int. Cl.: H04N 23/661, H04N 23/90

(54) **CAMERA CONTROL DEVICE, CAMERA CONTROL METHOD, AND NON-TRANSITORY COMPUTER READABLE STORAGE MEDIUM**

(30) Priority: 15.03.2024 JP 2024040761
(71) Applicant: amnimo Inc., Musashino-shi, Tokyo 180-8750 (JP)
(72) Inventor: Wada, Atsushi, Musashino-shi, Tokyo, 180-8750 (JP); Kojima, Osamu, Musashino-shi, Tokyo, 180-8750 (JP)
(74) Representative: Grünecker Patent- und Rechtsanwälte PartG mbB

(57) **Abstract**

A camera control device is installed in a private address space and controls cameras installed in the private address space. The camera control device includes a control unit that controls the cameras on the basis of control information transmitted from a server device installed in a public address space without performing a process of transmitting images captured by the cameras to the server device.

## Description

### BACKGROUND

### Technical Fields

The present invention relates to a camera control device, a camera control method, and a non-transitory computer readable storage medium. Priority is claimed on Japanese Patent Application No. 2024-040761, filed on March 15, 2024.

### Description of Related Art

In recent years, with the advancement of network technology and cloud technology, cloud recording services have been provided in which images captured by a camera are sent to a cloud server for saving, and the cloud server is used as a recording device, so to speak (refer to, for example, "Eagle Eye Cloud Video Replication," [online], [retrieved on March 1, 2024], Internet <URL: https://www.een.com/product/eagle-eye-cloud-video-replication/>). In such a cloud recording service, a user can refer to the images recorded in the cloud server whenever necessary by accessing the cloud server from a terminal device such as a personal computer, a smartphone, or a tablet.

The cloud recording services may implement not only the transmission and saving of videos, but also two-way control, such as remote control of camera's pan-tilt-zoom (PTZ) from the user's personal computer. In addition, the service also provides functions that reduce an amount of work when a large number of cameras are operated, such as automatically initializing newly installed cameras and putting them into a service-providing state.

Incidentally, conventional cloud recording services require equipment at a site at which the camera is installed to extract images captured by the camera and send them to a cloud server, as well as to control the camera. This is because the camera does not have a function for sending captured images to a cloud server, and thus the captured images have to be extracted from the camera and sent to the cloud server, and also because it is not possible to directly control a camera connected to a local private network from a public network to which the cloud server is connected. Such a device is called a "bridge" in the cloud recording service described in "Eagle Eye Cloud Video Replication," [online], [retrieved on March 1, 2024], Internet <URL: https://www.een.com/product/eagle-eye-cloud-video-replication/>.

The above-described equipment required for conventional cloud recording services needs to handle high bitrate data in order to transmit the images captured by the camera to the cloud server. To this end, the above-described equipment requires a central processing unit (CPU) with high processing ability, which is one of the factors that increase equipment costs for cloud recording services. In addition, since it may be difficult to secure a space to install additional devices at the site at which the camera is in operation, and there is also a desire on the local side to reduce the amount of maintenance and operation on the device, there is a demand for the equipment to be installed at the site to have as small a size as possible and be able to handle a large number of cameras with few pieces of equipment.

The present invention has been made in consideration of the above circumstances, and an object of the present invention is to provide a camera control device, a camera control method, and a non-transitory computer readable storage medium that can significantly reduce equipment costs.

### SUMMARY

In order to solve the above problems, a camera control device according to a first aspect of the present invention is a camera control device (1) that is installed in a private address space (SP1) and controls cameras (C1 to C3) installed in the private address space, including a control unit (12) that controls the cameras on the basis of control information transmitted from a server device (4) installed in a public address space (SP2) without performing a process of transmitting images captured by the cameras to the server device.

Further, according to a camera control device according to a second aspect of the present invention, in the camera control device according to the first aspect of the present invention, when the control unit detects a new camera in the private address space, the control unit makes a registration request for the new camera to the server device.

Further, according to a camera control device according to a third aspect of the present invention, in the camera control device according to the second aspect of the present invention, when a new camera is registered on the server device on the basis of the registration request, the control unit performs initial setting of the new camera registered on the server device on the basis of initial setting information transmitted from the server device as the control information.

Further, according to a camera control device according to a fourth aspect of the present invention, in the camera control device according to the third aspect of the present invention, the initial setting information may include transmission destination information that indicates a transmission destination of images captured by the cameras, and the control unit may set the transmission destination of the images in a new camera on the basis of the transmission destination information.

Further, according to a camera control device according to a fifth aspect of the present invention, in the camera control device according to the fourth aspect of the present invention, the initial setting information may include camera setting information that indicates an imaging area of the cameras, a frame rate of the images captured by the cameras, and a bit rate when the images captured by the cameras are transmitted to the server device, and the control unit may set the imaging area, the frame rate, and the bit rate for the new camera on the basis of the camera setting information.

Further, according to a camera control device according to a sixth aspect of the present invention, in the camera control device according to any one of the first to fifth aspects of the present invention, when the camera control information including at least one of the imaging area of the cameras, the frame rate of the images captured by the cameras, and the bit rate when the images captured by the cameras are transmitted to the server device is transmitted as the control information from the server device, the control unit may control the cameras on the basis of the camera control information.

Further, according to a camera control device according to a seventh aspect of the present invention, in the camera control device according to any one of the first to sixth aspects of the present invention, when the control information transmitted from the server device is no longer received, the control unit may perform control for storing the images captured by the cameras in a storage device (2) installed within the private address space.

Further, according to a camera control device according to an eighth aspect of the present invention, in the camera control device according to the seventh aspect of the present invention, when the control information that has stopped being received is received again, the control unit may terminate the control for storing the images captured by the cameras in the storage device, and may perform control for transmitting the images stored in the storage device to the server device.

Further, according to a camera control device according to a ninth aspect of the present invention, in the camera control device according to any one of the first to eighth aspects of the present invention, when the control unit detects, within the private address space, a camera that is in a stopped state among the cameras registered in the server device, the control unit may perform control for restarting the camera that is in the stopped state.

Further, according to a camera control device according to a tenth aspect of the present invention, in the camera control device according to the ninth aspect of the present invention, the control unit may restart the camera that is in the stopped state by controlling a power supply device (PS) that supplies electric power to the cameras.

Further, a camera control method according to an aspect of the present invention is a camera control method that controls cameras (C1 to C3) installed in a private address space (SP1), including controlling the cameras on the basis of control information transmitted from a server device (4) installed in a public address space (SP2) without performing a process of transmitting images captured by the cameras to the server device.

Further, a non-transitory computer readable storage medium according to an aspect of the present invention stores a camera control program that causes a computer installed in a private address space (SP1) to function as a camera control device (1) that controls cameras (C1 to C3) installed in the private address space. The camera control program causing the computer to control the cameras on the basis of control information transmitted from a server device (4) installed in a public address space (SP2) without performing a process of transmitting images captured by the cameras to the server device (4).

According to the present invention, since a camera control device that controls cameras installed in a private address space no longer needs to perform a process of transmitting images captured by the cameras to a server device installed within the public address space, and a CPU with high processing ability is no longer required, equipment costs can be significantly reduced.

Further features and aspects of the present disclosure will become apparent from the following detailed description of exemplary embodiments with reference to the attached drawings.

### BRIEF DESCRIPTION OF THE DRAWINGS

FIG. 1 is a diagram showing an overall configuration of a cloud recording system in which a camera control device according to an embodiment of the present invention is used.
FIG. 2 is a timing chart showing an operation upon camera detection in an embodiment of the present invention.
FIG. 3 is a flowchart showing an operation upon communication failure in an embodiment of the present invention.

### DETAILED DESCRIPTION OF THE EMBODIMENTS

A camera control device, a camera control method, and a non-transitory computer readable storage medium according to an embodiment of the present invention will be described in detail below with reference to the accompanying drawings. In the following, a summary of the embodiment of the present invention will be first described, and then the details of the embodiment of the present invention will be described.

### [Summary]

The embodiment of the present invention provides a camera control device, a camera control method, and a non-transitory computer readable storage medium that can significantly reduce equipment costs. The embodiment of the present invention can be applied to various surveillance systems that use a camera, such as, for example, a cloud recording service that transmits and saves images (including both still images and moving images) captured by a camera to a cloud server.

Most conventional cameras used in a cloud recording service and the like are equipped with a PULL-type protocol such as a real time streaming protocol (RTSP) as a protocol for controlling distribution (streaming) of image data. When such a camera is installed in a private address space, it is not possible to extract images captured by a camera from a public address space side across a network address translation (NAT).

For this reason, conventionally, equipment for acquiring images captured by the camera and transmitting them to a cloud server installed in a public space was needed within the private address space in which the camera was installed. This equipment was needed to control the camera from the public address space side.

However, such equipment is needed to perform high-load processing, such as acquiring images with large amounts of data from the camera, converting the protocol, and transmitting the images to a cloud server. This requires a CPU with high processing ability, which is one of factors that increase equipment costs. In addition, because a processing load required to transmit images with the large amounts of data to the cloud server is large, the number of cameras that can be supported by a single piece of equipment is small, and cost-effectiveness is poor.

In recent years, the number of cameras equipped with a PUSH-type protocol such as a real time messaging protocol (RTMP) or secure reliable transport (SRT) has been increasing. When a camera equipped with such a protocol is used, it becomes possible to transmit images to a cloud server even though the above-described equipment is not installed in the private address space in which the camera is installed. However, there is still a need to control the camera from the public address space side.

An embodiment of the present invention is one in which a camera control device is installed within a private address space to control the camera installed within the same private address space. The camera control device controls the camera on the basis of control information transmitted from a server device, without transmitting images captured by the camera to the server device installed in a public address space. Thus, since the camera control device does not need to perform the transmission processing to the server device that was previously required, and only needs to control the camera on the basis of the control information transmitted from the server device, there is no need for a CPU with high processing ability, and equipment costs can be significantly reduced.

### [Embodiment]

### <Cloud recording system>

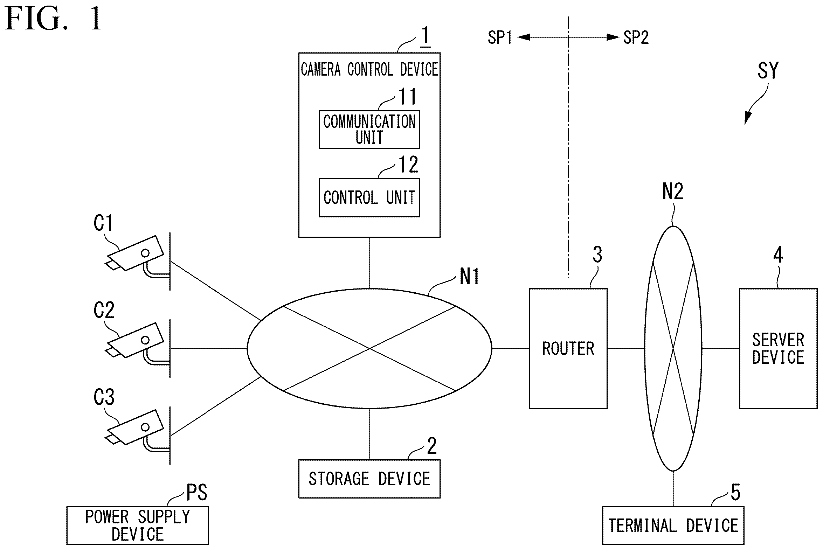

FIG. 1 shows an overall configuration of a cloud recording system in which a camera control device according to an embodiment of the present invention is used. As shown in FIG. 1, the cloud recording system SY includes cameras C1 to C3, a camera control device 1, a storage device 2, a router 3, a server device 4, and a terminal device 5. The cameras C1 to C3, the camera control device 1, the storage device 2, and the router 3 are communicatively connected via a network N1. The router 3, the server device 4, and the terminal device 5 are communicatively connected via a network N2.

The network N1 is, for example, a local area network (LAN) installed in a plant, a factory, or other various facilities. The network N2 is, for example, a wide area network (WAN) such as the Internet. The networks N1 and N2 may be any of a network capable of wired communication, a network capable of wireless communication, and a network capable of both wired communication and wireless communication.

Here, the cameras C1 to C3, the camera control device 1, the storage device 2, and the router 3 connected to the network N1 are installed within a private address space SP1 in which private addresses (for example, private IP addresses) are used. On the other hand, the router 3, the server device 4, and the terminal device 5 connected to the network N2 are installed in a public address space SP2 in which public addresses (for example, public IP addresses) are used.

The cameras C1 to C3 are cameras of which imaging area (an angle of view, a direction, and the like) can be changed. The cameras C1 to C3 are, for example, PTZ cameras that can be panned, tilted, and zoomed by remote control. Panning refers to swinging in a horizontal (left-right) direction, tilting refers to swinging in a vertical (up-down) direction, and zooming refers to enlarging and reducing a captured image. The cameras C1 to C3 is equipped with the PUSH-type protocol such as RTMP or SRT.

The angle of view, the direction and the like of the cameras C1 to C3 are controlled by a camera control device 1. The cameras C1 to C3 may be capable of only one or two of panning, tilting, and zooming. Furthermore, the number of cameras is not particularly limited, and may be 2 or less, or 4 or more. The cameras C1 to C3 is operated by electric power supplied from a power supply device PS.

The camera control device 1 controls the cameras C1 to C3 on the basis of instructions from the server device 4. Here, the control of the cameras C1 to C3 performed by the camera control device 1 includes, for example, initial setting of a camera newly connected to the network N1 (a camera newly installed in the private address space SP1), control of the imaging areas of the cameras C1 to C3, and the like. The camera control device 1 may be provided as a stand-alone device, or may be provided in a form incorporated into a communication device such as a gateway or a router. Also, the camera control device 1 may be realized by a computer such as a personal computer or a workstation. Details of the camera control device 1 will be described below.

The storage device 2 temporarily stores images captured by the cameras C1 to C3 when a communication failure occurs due to an abnormality in the network N2, the server device 4, or the like, for example. This storage device 2 is provided to back up the images captured by the cameras C1 to C3 when the communication failure occurs as described above. As the storage device 2, for example, a network attached storage (NAS) can be used. Moreover, a recording memory such as an SD card installed in the cameras C1 to C3 may be used as the storage device 2. The storage device 2 may be integrated with the camera control device 1.

The router 3 interconnects the network N1 constructed in the private address space SP1 and the network N2 constructed in the public address space SP2. The router 3 has a function (NAT) for converting a private address into a public address and converting a public address into a private address. A firewall is also built in the router 3. The router 3 also performs routing (path control) using a routing table (not shown).

The server device 4 saves images transmitted from the cameras C1 to C3 via the network N1, the router 3, and a network N3. In other words, the server device 4 records the images captured by the cameras C1 to C3. Furthermore, the server device 4 provides the recorded images to the terminal device 5 in response to a request from the terminal device 5. The server device 4 also performs a registration process for the cameras C1 to C3, and transmits, as control information, to the camera control device 1, initial setting information for initial setting of the cameras C1 to C3 for which the registration process has been performed. Furthermore, in response to an instruction from the terminal device 5, the server device 4 transmits the control information for controlling the cameras C1 to C3 to the camera control device 1. The control information is exchanged between the server device 4 and the camera control device 1 at regular time intervals.

The terminal device 5 is, for example, a terminal device operated by a user who uses the cameras C1 to C3. As the terminal device 5, a computer such as a personal computer or a workstation, a smart phone, a tablet, or the like can be used. For ease of explanation, in FIG. 1, it is assumed that the terminal device 5 is connected to the network N2 (provided in the public address space SP2). However, the terminal device 5 may be connected to the network N1 (may be provided in the private address space SP1).

### <Camera control device>

As shown in FIG. 1, the camera control device 1 includes a communication unit 11 and a control unit 12 (control means). The communication unit 11 performs communication via the network N1 under the control of the control unit 12. Specifically, the communication unit 11 performs communication with the cameras C1 to C3 via the network N1, and performs communication with the storage device 2 via the network N1. The communication unit 11 also performs communication with the server device 4 via the network N1, the router 3, and the network N2.

The control unit 12 controls the cameras C1 to C3 on the basis of the control information transmitted from the server device 4. The control unit 12 controls the cameras C1 to C3 by, for example, a method that independently extends a method based on the open network video interface forum (ONVIF) standard. Here, the control unit 12 does not perform the process of acquiring images captured by the cameras C1 to C3 and transmitting them to the server device 4 as in the conventional case. This is because, as described above, the cameras C1 to C3 are equipped with a PUSH-type protocol such as RTMP or SRT, and are thus capable of transmitting the images directly to the server device 4.

When the control unit 12 detects a new camera in the private address space SP1, it requests the server device 4 to register the new camera. In addition, when the new camera is registered in the server device 4 based on the registration request, the control unit 12 performs initial setting of the new camera registered in the server device 4 on the basis of the initial setting information transmitted as the control information from the server device 4.

Here, the initial setting information includes transmission destination information and camera setting information. The transmission destination information is information that indicates a transmission destination to which an image captured by the camera are to be transmitted. This transmission destination information is, for example, an address (for example, an IP address) of the server device 4 in the public address space SP2. Further, the camera setting information is information that indicates an imaging area of the camera, a frame rate of the image captured by the camera, and a bit rate when the image captured by the camera is transmitted to the server device 4.

The control unit 12 sets an image transmission destination to the new camera on the basis of the above-described transmission destination information. Also, the control unit 23 sets the imaging area, the frame rate, and the bit rate to the new camera on the basis of the above-described camera setting information. By performing such settings, the new camera becomes capable of transmitting captured images to the server device 4.

When camera control information for a camera that has been registered in the server device 4 is transmitted to the control unit 12, the control unit 12 controls the camera on the basis of the camera control information. Here, the camera control information includes at least one of the imaging area of the camera, the frame rate of the image captured by the camera, and the bit rate when the image captured by the camera is transmitted to the server device 4. For example, when the camera control information including the imaging area of the camera is transmitted from the server device 4, the control unit 12 controls the camera so that the imaging area of the camera becomes the imaging area included in the camera control information.

When the control information exchanged at regular time intervals with the camera control device 1 is no longer received, the control unit 12 controls the storage of the images captured by the cameras C1 to C3 in the storage device 2 installed within the private address space SP1. For example, the control unit 12 performs the above control by temporarily changing the transmission destination information set in the cameras C1 to C3 to an address of the storage device 2. The control information may not be received when a communication failure occurs due to an abnormality in the network N2, the server device 4, or the like, for example. Furthermore, when a recording memory such as an SD card installed in the cameras C1 to C3 is used as the storage device 2, the transmission destination information is not changed, but the process switches to saving the images in the its own recording memory.

In addition, when the control information that had stopped receiving is received again, the control unit 12 terminates the control for storing the images captured by the cameras C1 to C3 in the storage device 2, and performs control for transmitting the images stored in the storage device 2 to the server device 4. For example, the control unit 12 restores the temporarily changed transmission destination information of the cameras C1 to C3 to the original one, and causes the storage device 2 to perform a process of transmitting the images stored in the storage device 2 to the server device 4. The control unit 12 may read out the images stored in the storage device 2 and may transmit them to the server device 4.

Furthermore, when the control unit 12 detects a camera in a stopped state among the cameras registered in the server device 4 within the private address space SP1, it performs control for restarting the camera that is in the stopped state. For example, the control unit 12 restarts the camera that is in the stopped state by controlling the power supply device PS that supplies electric power to the camera.

Furthermore, when the control unit 12 receives a request to control the PTZ of a specific camera requested by the user via the server device 4, it performs control on the specific camera according to the requested content. By performing such control, the user can realize PTZ control of the camera, and the imaging area of the camera is changed.

Functions of the camera control device 1 (functions of the communication unit 11 and the control unit 12) are realized by executing a program that realizes these functions on hardware such as a central processing unit (CPU). In other words, the functions of the camera control device 1 are realized by cooperation of software and hardware resources. Since functions of a processing unit 25 of the camera control device 1 are realized by the cooperation of the software and hardware resources, for example, functions can be updated, deleted, added, or the like very easily.

The functions of the camera control device 1 are realized by the cooperation of the software and hardware resources, but the hardware does not require any special functions, and a general-purpose processor can be used. Therefore, the camera control device 1 can be realized not only by installing software in dedicated hardware, but also as software that runs on a computer,server device, or the like that is already installed and operated within the private address space SP1.

### <Operation of the cloud recording system>

Next, an operation of the cloud recording system will be described. Hereinafter, an operation when a new camera is detected within the private address space SP1 (an operation when a camera is detected), and an operation when a communication failure occurs due to an abnormality in the network N2,an abnormality in the server device 4 (an operation when a communication failure occurs), or the like will be described. An operation when the cameras C1 to C3 are subjected to the PTZ control (an operation during the PTZ control) will also be described.

### <<Operation when camera is detected>>

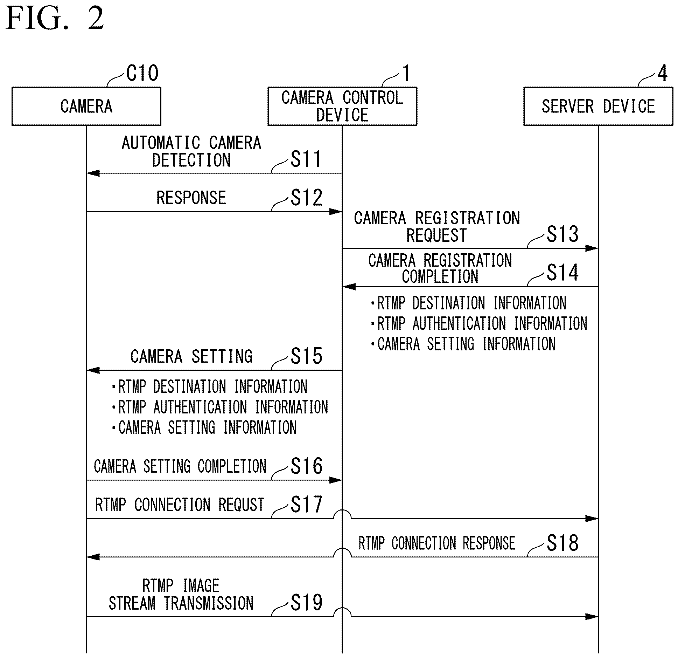

FIG. 2 is a timing chart that described the operation when a camera is detected in an embodiment of the present invention. In FIG. 2, for ease of understanding, the camera newly detected in the private address space SP1 is referred to as a "camera C10." In addition, the control of the camera control device 1 described below is mainly performed by the control unit 12 of the camera control device 1, but for simplicity of explanation, the following description will be given assuming that it is performed by the camera control device 1.

The camera control device 1 broadcasts a detection packet for detecting the camera onto the network N1 (Step S11). The camera control device 1 broadcasts the detection packet onto the network N1, for example, on a regular cycle. When the camera C10 receives the detection packet broadcast onto the network N1, the camera C10 responds to the camera control device 1 (Step S12). This response includes a name of the camera C10 (a camera name), a model of the camera C10, and an address of the camera C10 (for example, an IP address).

When the camera control device 1 receives the response from the camera C10, it makes a camera registration request to the server device 4 (Step S13). This camera registration request includes the name, model, and address of the camera C10 that were included in the response from the camera C10. When the server device 4 receives the camera registration request from the camera control device 1, the server device 4 performs a registration process for the camera C10 on the basis of the camera registration request.

When the server device 4 receives the camera registration request, the server device 4 can select whether or not to perform the registration process from the following options.
- Regardless of the camera, when the camera registration request is received, the registration process is always performed.
- When the camera registration request is for a camera that has been approved for registration in advance, the registration process is performed.
- A camera for which registration is requested is present to an administrator, and when the administrator instructs permission for registration, the registration process is carried out.

When the registration process is completed, the server device 4 notifies the camera control device 1 of the completion of the camera registration (Step S14). When the server device 4 does not carry out the registration process, the completion of the camera registration is not notified, and processes after Step S14 shown in FIG. 2 are not carried out. Here, the notification of the completion of the camera registration includes initial setting information for performing initial setting of the camera C10. Specifically, the notification includes RTMP destination information (transmission destination information), RTMP authentication information, and camera setting information.

The RTMP destination information is information that indicates a destination (a transmission destination) to which the camera C10 transmits an image by RTMP, and is, for example, a uniquely determined uniform resource locator (URL). The RTMP authentication information is authentication information (ID and password) required when the camera C10 transmits an image by RTMP. The camera setting information is information that indicates the imaging area of the camera C10, the frame rate of the image captured by the camera C10, the bit rate when the image captured by the camera C10 is transmitted to the server device 4, and the like.

When the camera control device 1 receives the notification of the completion of the camera registration from the server device 4, the camera control device 1 performs the camera setting (the initial setting) for the camera C10 (Step S15). Specifically, the camera control device 1 sets, in the camera C10, a destination to which the camera C10 transmits the images by RTMP, on the basis of the RTMP destination information. Furthermore, the camera control device 1 sets the RTMP authentication information in the camera C10. Furthermore, the camera control device 1 sets the imaging area, the frame rate, and the bit rate in the camera C10 on the basis of the camera setting information. When the camera setting is completed, the camera C10 notifies the camera control device 1 of the completion of the camera setting (Step S16).

When the initial setting of the camera C10 is completed, the camera C10 performs an RTMP connection request with respect to the server device 4 using the RTMP authentication information set in Step S15 (Step S17). When the server device 4 receives the RTMP connection request, the server device 4 authenticates the RTMP authentication information transmitted from the camera C10. When the authentication is successful, the server device 4 transmits an RTMP connection response to the camera C10 (Step S18). When the server device 4 fails the authentication, the RTMP connection response is not transmitted, and the processes after Step S18 shown in FIG. 2 are not performed.

When the camera C10 receives the RTMP connection response transmitted from the server device 4, the camera C10 transmits the captured image as an RTMP stream (Step S19). In this manner, the new camera C10 in the private address space SP1 is automatically detected, the initial setting of the detected new camera C10 is performed, and images are transmitted from the camera C10 to the server device 4. As shown in FIG. 2, the camera control device 1 performs the control of the camera C10, but does not acquire images captured by the camera C10 and transmit them to the server device 4.

### <<Operation when communication failure occurs>>

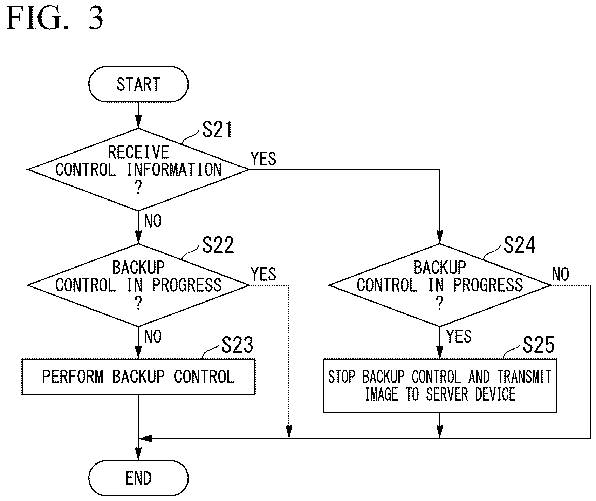

FIG. 3 is a flowchart describing the operation when a communication failure occurs in an embodiment of the present invention. The flowchart shown in FIG. 3 shows only the process performed by the camera control device 1, which is started at a regular cycle, for example.

When processes of the flowchart shown in FIG. 3 are started, the camera control device 1 determines whether or not it has received control information exchanged with the server device 4 at regular time intervals (Step S21). When the camera control device 1 determines that it has not received the control information (when the determination result in Step S21 is "NO"), the camera control device 1 determines whether or not backup control is being performed (Step S22). Here, the backup control refers to control for storing images captured by the cameras C1 to C3 in the storage device 2.

When the camera control device 1 determines that the backup control is not being performed (when the determination result in Step S22 is "NO"), the camera control device 1 performs the backup control (Step S23). For example, the camera control device 1 performs the backup control by temporarily changing the RTMP destination information (the transmission destination information) set in the cameras C1 to C3 to the address of the storage device 2. When a recording memory such as an SD card installed in the cameras C1 to C3 is used as the storage device 2, the transmission destination information is not changed but the process switches to saving the images in the its own recording memory..

On the other hand, when the camera control device 1 determines in Step S22 that the backup control is being performed (when the determination result in Step S22 is "YES"), the process of Step S23 is not performed.

On the other hand, when the camera control device 1 determines in Step S21 that it has received the control information (when the determination result in Step S21 is "YES"), the camera control device 1 determines whether or not backup control is being performed (Step S24). When the camera control device 1 determines that the backup control is being performed (when the determination result in Step S24 is "YES"'), the camera control device 1 stops the backup control and performs control for transmitting the images stored in the storage device 2 to the server device 4 (Step S25). For example, the camera control device 1 restores the temporarily changed transmission destination information of the cameras C1 to C3 to the original state, and causes the storage device 2 to perform a process of transmitting the images stored in the storage device 2 to the server device 4. On the other hand, when the camera control device 1 determines in Step S24 that the backup control is being performed (when the determination result in Step S24 is "NO"), the process in Step S25 is not performed.

In other words, when there is no communication failure due to an abnormality in the network N2,the server device 4, or the like, and the backup control is not being performed, the determination result in Step S21 will be "YES," and the determination result in Step S24 will be "NO." Thus, the camera control device 1 does not perform any special control.

On the other hand, when a communication failure occurs, the determination result in Step S21 will be "NO." Furthermore, since the backup control is not being performed at the time when the communication failure occurs, the determination result in Step S22 will be "NO." Therefore, the camera control device 1 performs the backup control (Step S23).

When the communication failure has not been resolved even after a certain time interval (a time interval during which the control information is exchanged) has elapsed since the communication failure occurs, the determination result in Step S21 becomes "NO." Moreover, since the backup control is being performed at this point in time, the determination result in Step S22 is "YES." In other words, since the backup control is already being performed, the camera control device 1 does not perform the backup control redundantly.

When the communication failure is restored, the determination result in Step S21 becomes "YES." Also, since the backup control is being performed at this point in time, the determination result in Step S24 becomes "YES." Therefore, the camera control device 1 stops the backup control, and performs control for transmitting the images stored in the storage device 2 to the server device 4 (Step S25).

### << Operation of PTZ control>>

The user can view images from a specific camera displayed on the terminal device 5 by accessing the server device 4 using the terminal device 5. While viewing the images of the camera displayed on the terminal device 5, the user requests PTZ control of the camera using a control tool presented on the terminal device 5. The server device 4 that receives this request requests the camera control device 1 to perform the PTZ control of the specific camera.

The camera control device 1 which has received a request for PTZ control of a specific camera from the server device 4 transmits a PTZ control signal to the specific camera using a signal conforming to ONVIF or the like. The camera that receives this control signal performs panning, tilting, or zooming on the basis of the PTZ control signal.

As described above, in the embodiment, the camera control device 1 is installed within the private address space SP1, and controls the cameras C1 to C3, and C10 installed within the same private address space SP1. This camera control device 1 controls the cameras C1 to C3 and C10 on the basis of the control information transmitted from the server device 4 without transmitting the images captured by the cameras C1 to C3 and C10 to the server device 4 installed in the public address space SP2. As a result, since the camera control device 1 does not need to perform a transmission process to the server device 4 that was previously required, and only needs to control the cameras C1 to C3 and C10 on the basis of the control information transmitted from the server device 4, a CPU with high processing ability is no longer necessary, and the equipment cost can be significantly reduced.

Although the camera control device, the camera control method, and the non-transitory computer readable storage medium according to an embodiment of the present invention have been described above, the present invention is not limited to the above-described embodiment and can be freely modified within the scope of the present invention. For example, in the above-described embodiment, for ease of understanding, an example was described in which the cameras C1 to C3, C10 transmit images to a specific server device 4, but the transmission destination of the images may also be a cloud computing system.

In the above-described embodiment, the example in which the protocol installed in the cameras C1 to C3 and C10 is RTMP or SRT has been described. However, the protocol is not limited to RTMP or SRT, and any protocol may be used as long as it transmits images using a PUSH-type protocol. In the above embodiment, the example in which the control unit 12 of the camera control device 1 performs control in accordance with the ONVIF standard has been described. However, the control is not limited to that conforming to the ONVIF standard, and any control may be used as long as it is possible to control the cameras C1 to C3 and C10 installed in the private address space SP1 from the public address space SP2 side.

In the above-described embodiment, the example in which the camera control device 1 is installed as a device separate from the cameras C1 to C3 and C10, the storage device 2, and the router 3 has been described. However, the camera control device 1 may be integrated with the cameras C1 to C3 and C10, the storage device 2, or the router 3.

## Claims

1. A camera control device that is installed in a private address space and controls cameras installed in the private address space, the camera control device comprising:
a control unit that controls the cameras on the basis of control information transmitted from a server device installed in a public address space without performing a process of transmitting images captured by the cameras to the server device.

2. The camera control device according to claim 1,
wherein, when the control unit detects a new camera in the private address space, the control unit makes a registration request for the new camera to the server device.

3. The camera control device according to claim 2,
wherein, when a new camera is registered on the server device on the basis of the registration request, the control unit performs initial setting of the new camera registered on the server device on the basis of initial setting information transmitted from the server device as the control information.

4. The camera control device according to claim 3,
wherein the initial setting information includes transmission destination information that indicates a transmission destination of images captured by the cameras, and
wherein the control unit sets the transmission destination of the images in a new camera on the basis of the transmission destination information.

5. The camera control device according to claim 4,
wherein the initial setting information includes camera setting information that indicates an imaging area of the cameras, a frame rate of the images captured by the cameras, and a bit rate when the images captured by the cameras are transmitted to the server device, and
wherein the control unit sets the imaging area, the frame rate, and the bit rate for the new camera on the basis of the camera setting information.

6. The camera control device according to any one of claims 1 to 5,
wherein, when the camera control information including at least one of the imaging area of the cameras, the frame rate of the images captured by the cameras, and the bit rate when the images captured by the cameras are transmitted to the server device is transmitted as the control information from the server device, the control unit controls the cameras on the basis of the camera control information.

7. The camera control device according to any one of claims 1 to 5,
wherein, when the control information transmitted from the server device is no longer received, the control unit performs control for storing the images captured by the cameras in a storage device installed within the private address space.

8. The camera control device according to claim 7,
wherein, when the control information that has stopped being received is received again, the control unit terminates the control for storing the images captured by the cameras in the storage device, and performs control for transmitting the images stored in the storage device to the server device.

9. The camera control device according to any one of claims 1 to 5,
wherein, when the control unit detects, within the private address space, a camera that is in a stopped state among the cameras registered in the server device, the control unit performs control for restarting the camera that is in the stopped state.

10. The camera control device according to claim 9,
wherein the control unit restarts the camera that is in the stopped state by controlling a power supply device that supplies electric power to the cameras.

11. A camera control method that controls cameras installed in a private address space, the camera control method comprising:
controlling the cameras on the basis of control information transmitted from a server device installed in a public address space without performing a process of transmitting images captured by the cameras to the server device.

12. A non-transitory computer readable storage medium that stores a camera control program that causes a computer installed in a private address space to function as a camera control device that controls cameras installed in the private address space, the camera control program causing the computer to:
control the cameras on the basis of control information transmitted from a server device installed in a public address space without performing a process of transmitting images captured by the cameras to the server device.
